# EUROPEAN PATENT SPECIFICATION

(11) **EP 0 310 282 B1**
(45) Date of publication and mention of the grant of the patent: **03.03.1993**
(21) Application number: 88308694.4
(22) Date of filing: 20.09.1988
(51) Int. Cl.: B65G 47/84, B65G 47/53

(54) **Glass container transfer mechanism**
Übergabevorrichtung für Glasbehälter
Dispositif de transfert pour récipients en verre

(30) Priority: 30.09.1987 US 103080
(43) Date of publication of application: 05.04.1989
(73) Proprietor: Emhart Glass Machinery Investments Inc., Wilmington, Delaware 19801 (US)
(72) Inventor: Kulig, Constantine W., Windsor Connecticut 06095 (US)
(74) Representative: Wetters, Basil David Peter

(56) References cited:
- CH-A- 657 598
- US-A- 3 701 407

## Description

The present invention relates to transfer mechanism for transferring newly formed hot glass containers from an infeed conveyor to a cross conveyor.

In U.S. patent specification No. 3 701 407 which corresponds To the preamable of claim 1, is described a transfer mechanism for transferring containers from an infeed conveyor to a perpendicularly arranged cross conveyor comprising a conveyor and a plurality of pushers secured to the conveyor for engaging glass containers on the infeed conveyor and pushing the engaged containers onto the cross conveyor.

The construction of this transfer mechanism has certain limitations. Firstly the spacing of the containers on the infeed conveyor and on the outfeed conveyor are substantially the same - thus it is necessary that the two conveyors operate at substantially the same speed. It is desirable to be able to transfer a widely spaced array of containers on the infeed conveyor to a more closely spaced array on the outfeed conveyor, thus allowing for a lower speed of the outfeed conveyor. Secondly the mechanism is not readily adaptable to work with an outfeed conveyor that is not substantially perpendicular to the infeed conveyor.

It is an object of the present invention to provide a transfer mechanism capable of high speed operation and not subject to the above limitations.

The present invention provides a transfer mechanism for transferring containers from an infeed conveyor to a cross conveyor comprising a conveyor and a plurality of pushers mounted on the conveyor for engaging glass containers at a pick up location on the infeed conveyor and pushing the engaged containers onto the cross conveyor at a deposit location, characterised in that each pusher comprises a finger assembly having L shaped finger means for engaging a container, a first roller, a second roller and means for mounting the finger assembly for pivotal displacement between advanced and retracted positions, and that the transfer mechanism comprises a guide rail which extends in the direction of motion of the conveyor from adjacent the pick up location to adjacent the deposit location and which engages the first roller and positions the finger assembly in its advanced position as it travels from the pick up location to the deposit location, and cam groove means extending in the direction of motion of the conveyor from adjacent the deposit location which engages the second roller and displaces the finger assembly from its advanced to its retracted position when the engaged container has been moved onto the cross conveyor.

Referring to the drawings:
Figure 1 is a top view of a portion of a glassware transfer mechanism made in accordance with the teachings of the present invention, showing glassware articles being transferred from an infeed conveyor to a cross conveyor;
Figure 2 is an enlarged top view of a pusher assembly of the transfer mechanism shown in Figure 1; and
Figure 3 is an oblique, exploded view of three elements of the pusher assembly.

An infeed conveyor 10 delivers glassware containers A in single file to a transfer mechanism 12 which transfers the containers across a dead plate 14 to a cross conveyor 16 which extends generally perpendicularly (± 15°) to the infeed conveyor. A carrier chain or conveyor 20 of the transfer mechanism 12 carries equally spaced pushers 22 which include a support bracket assembly 24 secured to conveyor pins 26. In the operation of the transfer mechanism the pushers 22 engage containers at a pickup location on the infeed conveyor 10 and push them across the dead plate 14 onto the cross conveyor 16 at a deposit location.

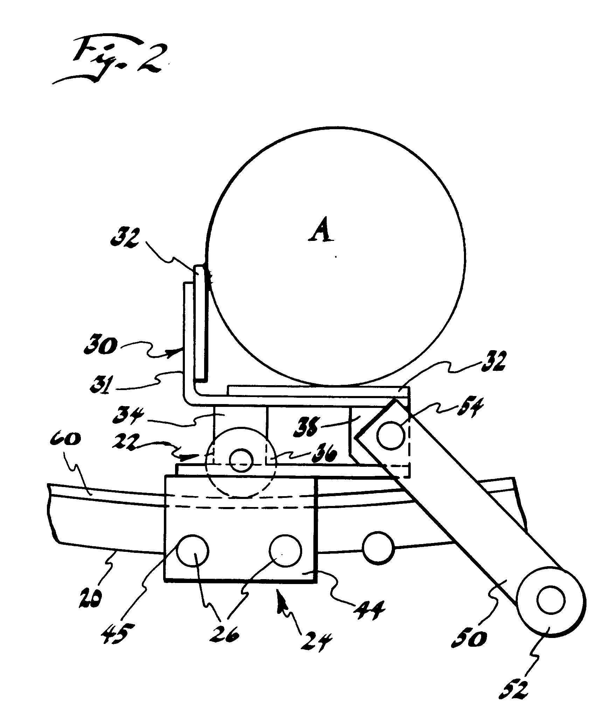

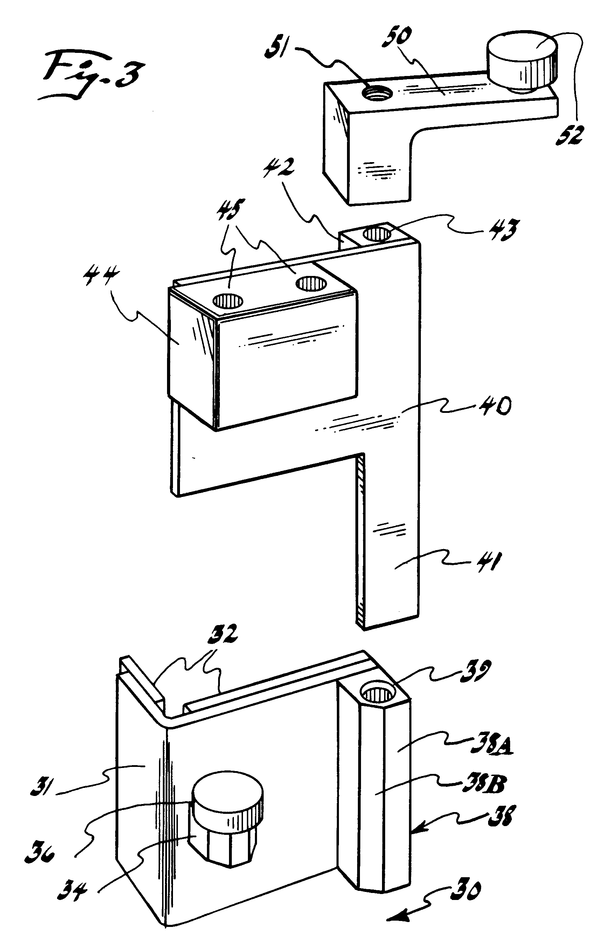

As can be seen from Figures 2 and 3, the pusher 22 also includes a finger assembly 30 which has an L-shaped finger means in the form of a bracket 31 to which are releasably secured pads 32 for engaging a container, a roller bracket 34 which is secured to the finger bracket 31 and which supports a first or inner roller 36, and a bearing sleeve member 38 having a through bore 39 extending vertically therethrough. The support bracket assembly 24 includes a mounting plate 40 which has a depending portion 41 adjacent to the outer planar surface 38A of the bearing sleeve member 38, a bearing sleeve member 42 having a vertical through bore 43 and a block member 44 having a pair of carrier pin receiving bores 45. The pusher 22 is completed by a lever member 50 having a vertical through bore 51 at one end and a second roller 52 at the other, and a roller bearing shaft 54 (Figure 2) which extends through the pusher bores 39, 43, 51 and is fastened to the finger assembly 30 and to the lever member 50.

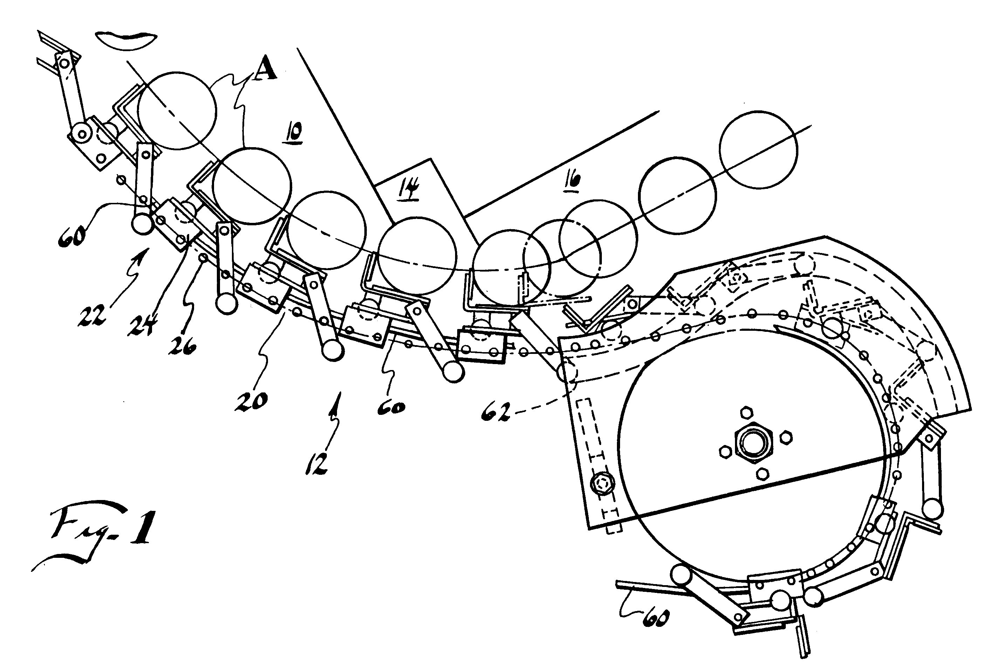

The inner roller 36 rides on the outer surface of a guide rail 60 (see Figures 1 and 2) which extends almost entirely around the conveyor 20 (Figure 3). As a pusher 22 approaches the infeed conveyor 10, the inner roller 36 rides on the guide rail 60 and the finger assembly 30 is held in a fully advanced position (Figure 2). The pads 32 engage a bottle and automatically centrally locate the container between the pads of the L-shaped bracket 31. The conveyor 20, during the transfer operation, follows a concave path to change the direction of the container by about 90° between the pads 32. The guide rail 60 ends adjacent the deposit location as the container approaches the cross conveyor, and the finger element 30 is then free to rotate about shaft 54 (the corner 38B of the sleeve 38 is suitably beveled). The outer roller 52 then enters into a cam groove 62. This groove 62 extends from adjacent the deposit location and is defined so that when the finger assembly 30 has located the container in alignment with the other containers on the cross conveyor 16, the lever arm 50 will be rapidly pivoted in the counterclockwise direction to pivot the finger assembly 30 to a fully retraced position and will maintain the finger element away from the containers on the cross conveyor as the pusher moves along the conveyor 20.

Once clear of the bottles on the cross conveyor, the groove 62 pivots the finger assembly toward the fully advanced position, and this pivotal displacement to the fully advanced position is completed by the guide rail 60 which engages the inner roller 36 once the outer roller 52 has left the cam groove 62. The finger assembly is maintained at this fully advanced position from the time a container is picked up until the inner roller 36 leaves the guide rail 60. Pivoting the finger assembly beyond the fully advanced position is prevented by the depending portion 41 of the mounting plate 40 which engages the outer planar surface 38A of the sleeve member 38 when the finger assembly reaches the fully advanced position.

## Claims

1. A transfer mechanism for transferring containers from an infeed conveyor (10) to a cross conveyor (16) comprising a conveyor (20) and a plurality of pushers (22) mounted on the conveyor (20) for engaging glass containers at a pick up location on the infeed conveyor and pushing the engaged containers onto the cross conveyor at a deposit location, each pusher (22) comprising a finger assembly (30) having L shaped finger means (31) for engaging a container,
characterised in that
each pusher (22) also comprises a first roller (36), a second roller (52) and means (54) for mounting the finger assembly (30) for pivotal displacement between advanced and retracted positions, and that the transfer mechanism comprises a guide rail (60) which extends in the direction of motion of the conveyor from adjacent the pick up location to adjacent the deposit location and which engages the first roller (36) and positions the finger assembly (30) in its advanced position as it travels from the pick up location to the deposit location, and cam groove means (62) extending in the direction of motion of the conveyor from adjacent the deposit location which engages the second roller and displaces the finger assembly (30) from its advanced to its retracted position when the engaged container has been moved onto the cross conveyor.

2. A transfer mechanism according to claim 1 characterised in that adjacent the exit end of the cam groove means (62) the rail 60 operates to displace the finger assembly (30) back from its retracted position to its advanced position.

3. A transfer mechanism according to claim 1 characterised in that each pusher comprises means (38A) which prevents advancement of the finger assembly (30) beyond its advanced position.

## Patentansprüche

1. Transfereinrichtung zur Beförderung von Behältern, von einem Eingabeförderer (10) zu einem Querförderer (16), mit einem Förderer (20) sowie einer Vielzahl von Schiebern (22), die zur Erfassung der Glasbehälter an einem Annahmeplatz auf dem Eingabeförderer am Förderer (20) befestigt sind und zum Weiterschieben der erfaßten Behälter auf den Querförderer an einem Abgabeplatz dienen, wobei jeder Schieber (22) eine Fingereinheit (30) mit einer L-förmigen Fingervorrichtung (31) zur Erfassung eines Behälters aufweist,
**dadurch gekennzeichnet,**
daß jeder Schieber (22) weiter eine erste Rolle (36), eine zweite Rolle (52) und Mittel (54) zur Befestigung der Fingereinheit (30) für die schwenkbare Verschiebung zwischen ausgefahrenen und zurückgezogenen Positionen aufweist, und daß die Transfereinrichtung eine Führungsschiene (60) umfaßt, die sich in Bewegungsrichtung des Förderers, neben dem Annahmeplatz beginnend und neben dem Abgabeplatz endend, erstreckt, mit der ersten Rolle (36) in Berührung kommt, und die Fingereinheit (30) auf ihrem Wege vom Annahmeplatz zum Abgabeplatz in die ausgefahrene Position bringt, und daß die Einrichtung eine Nockennut (62) aufweist, die sich in Bewegungsrichtung des Förderers neben dem Abgabeplatz beginnend erstreckt, mit der zweiten Rolle in Eingriff kommt und die Fingereinheit (30) aus der ausgefahrenen in die zurückgezogene Position versetzt, wenn der erfaßte Behälter auf den Querförderer geschoben worden ist.

2. Transfereinrichtung nach Anspruch 1, dadurch gekennzeichnet, daß die Schiene (60) neben dem Ausgangsende der Nockennut (62) die Rückver-schiebung der Fingereinheit (30) aus ihrer zurückgezogenen Position in ihre ausgefahrene Position bewirkt.

3. Transfereinrichtung nach Anspruch 1, dadurch gekennzeichnet, daß jeder Schieber Mittel (38A) aufweist, die das Ausfahren der Fingereinheit (30) über die ausgefahrene Position hinaus verhindern.

## Revendications

1. Mécanisme de transfert destiné à transférer des récipients d'un transporteur d'alimentation (10) à un transporteur (16) transversal comprenant un transporteur (20) et une pluralité de poussoirs (22) montés sur le transporteur (20) pour venir en contact avec des récipients de verre à un emplacement de prélèvement sur le transporteur d'alimentation et pour pousser ces récipients sur le transporteur transversal en un emplacement de dépose, chaque poussoir (22) comprenant un ensemble de doigt (30) possédant un moyen formant doigt (31), en forme de L, destiné à venir en contact avec un récipient, caractérisé en ce que chaque poussoir (22) comprend aussi un premier galet (36), un second galet (52) et des moyens (54) de montage de l'ensemble de doigt (30) pour lui permettre de décrire un mouvement de pivotement entre une position avancée et une position rétractée, et en ce que le mécanisme de transfert comprend un rail de guidage (60) qui s'étend dans la direction du mouvement du transporteur, depuis un point adjacent à l'emplacement de prélèvement jusqu'à un point adjacent à l'emplacement de dépose, et qui attaque le premier galet (36) et positionne l'ensemble de doigt (30) dans sa position avancée lorsqu'il se déplace de l'emplacement de prélèvement à l'emplacement de dépose, et des moyens formant rainure de came (62), qui s'étendent dans la direction du mouvement du transporteur à partir d'un point adjacent à l'emplacement de dépose, qui attaque le second galet et déplace l'ensemble de doigt (30) de sa position avancée à sa position rétractée lorsque le récipient attaqué a été placé sur le transporteur transversal.

2. Mécanisme de transfert selon la revendication 1, caractérisé en ce que, en un point adjacent à l'extrémité de sortie du moyen (62) formant rainure de came, le rail (60) agit pour ramener l'ensemble de doigt (30) de sa position rétractée à sa position avancée.

3. Mécanisme de transfert selon la revendication 1, caractérisé en ce que chaque poussoir comprend des moyens (38A) qui empêchent l'ensemble de doigt (30) d'avancer au-delà de sa position avancée.
